# EUROPEAN PATENT SPECIFICATION

(11) **EP 1 185 953 B1**
(45) Date of publication and mention of the grant of the patent: **10.12.2003**
(21) Application number: 00928461.3
(22) Date of filing: 27.04.2000
(51) Int. Cl.: G06K 17/00

(54) **STORAGE SYSTEM**
SPEICHERSYSTEM
SYSTEME DE STOCKAGE

(30) Priority: 28.04.1999 EP 99303314
(43) Date of publication of application: 13.03.2002
(73) Proprietor: THE PROCTER & GAMBLE COMPANY, Cincinnati, Ohio 45202 (US)
(72) Inventor: ASHTON, Kevin, John, London SE5 7RL (GB)
(74) Representative: Canonici, Jean-Jacques
(86) International application number: US0011304
(87) International publication number: WO00065532

(56) References cited:
- WO-A-97/39398
- WO-A-99/05660
- US-A- 5 548 282

## Description

The present invention relates to storage systems and, more particularly, to storage systems of the type used to display items in a supermarket or the like. The term 'storage' is thus used in the context of the present application to mean a system on or in which items may be held temporarily or semi-permanently until moved therefrom, such as display shelving systems in retail outlets and the like, warehouse shelving, etc.

WO-A-97 39 398 discloses a storage system comprising a central computer, a plurality of shelves for storing items and a plurality of electronic shelf labels. The central computer communicates with the shelf labels via IR transceivers mounted in the ceiling. The shelf label stores a product ID which corresponds to the items stored on the shelf. In use, the user employs a portable unit to read the product ID stored in the electronic shelf label so as to sum-up items placed in a shopping cart. The aim of this system is to avoid time consuming scanning of the selected items at the check-out. Inventory control can be performed using the portable unit. The shelf label is read and the quantity to order is manually entered into the portable unit and then uploaded to the central computer.

WO-A-99 05 660 discloses an article inventory system for a library. Each article (e.g. a book) stored in the system is provided with a RFID tag. The articles with their RFID tags are stored on shelves. In use, a portable RFID scanner reads the ID from each tag and stores the information in a portable computer. The read information is transmitted to a central computer for updating a database. This system allows missing or mis-located articles to be identified.

A number of difficulties exist in factories, wholesale outlets, and retail outiets such as supermarkets, in maintaining a stock of items and displaying items for sale to shoppers, etc. In particular in a retail outlet, it is necessary for the stocking of items on the shelves and similar supports to be monitored and, conventionally, this involves personnel carrying out a visual check and/or count in order to ensure that items are always available for purchase. However, this is obviously both time-consuming, prone to error, and expensive in staff costs. Additionally, changes in the pricing of items have to be indicated on the shelf and this again requires staff intervention. In both of these processes, monitoring and price adjustment, mistakes by staff can cause considerable annoyance and additional work.

The present invention is aimed at applying a system which can be used to overcome these problems as well as create additional advantages.

According to the present invention there is provided a storage system comprising one or more supports and, in a fixed physical association with the one or more supports, one or more sensors arranged i) to detect the presence of transponders attached to or integrally associated with items to be stored on the one or more supports, ii) to read information from the transponders, and iii) to transmit the information read from the transponders to, for example, a data processing unit.

The storage system may be a shelving system, for example, a display system as used in retail outlets or the like, or in warehouses etc.

An inventory control system may include a storage system as defined above, together with a data processing unit arranged to receive information the sensor or sensors.

The data processing unit is preferably a computer system programmed to maintain a database of information about individual items for stock control purposes and the like.

In particular, the transponders may comprise RFID tags which are attached to or otherwise integrally associated with items to be stored and displayed on the shelves.

By using such a system it is possible to detect or infer the presence, absence and removal of items from a support, eg. a shelf, either in real time or close to real time via continuous or continual intermittent polling.

The system may be used in a number of ways to manage logistics and inventory of items, for example, to analyse the level of stock of items on individual supports such as shelves and, via a computer system, trigger replenishment when the number of items falls below a pre-determined threshold level. The supports may be provided with electronic displays so as to display the prices of items and other information if desired, enabling price changes to be indicated substantially instantaneously. The location and quantity of items can also be checked for compliance with agreed plans and designs and misplaced items may also be readily located by means of such a system.

Accurate data about the off-take of items, for example, how many times an item is picked up and replaced before purchase, the effects of changes in store environment, e.g. signage, position, etc., and the identification of unusual shelf activity, e.g. the removal of large volumes of generally slow-moving items, may all be provided by such a system.

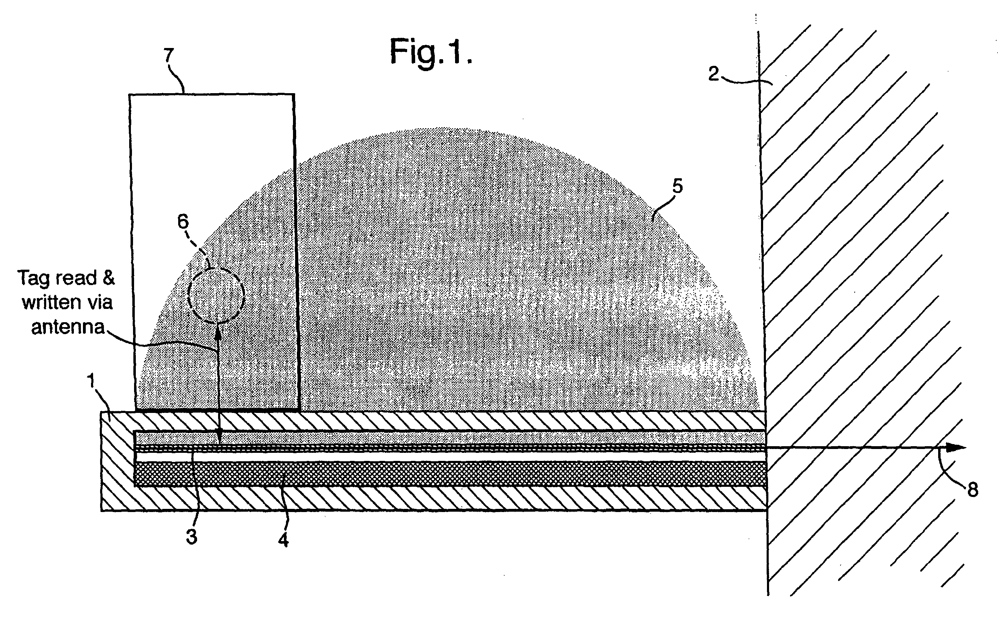

A number of examples of systems according to the present invention will now be described with reference to the accompanying drawings in which Figs. 1 to 5 each provide a diagrammatic cross-sectional view of a storage system in the form of a shelving system intended for reading radio frequency ID tags (RFID tags) which may be attached to or embedded in the packaging of individual items displayed for sale.

Fig. 1 illustrates a basic example in which a shelf 1 is supported from a wall panel or the like 2 along its rear edge, the shelf carrying, along its length, one or more antennas 3 which are shielded by appropriate shielding 4 from the shelf below and which, in effect, provide an antenna field 5 for the location and reading of information on RFID tags 6 attached to or embedded within items 7 disposed on the shelf 1. The RFID tags (which are conventional) each consist of an integrated circuit attached to a radio antenna affixed to substrate, and the shelf can send and receive digital data to the receiving antennae of the tags via radio signals at frequencies of the electro-magnetic spectrum including 125khz, 13.56mhz and 2.45ghz.

The or each antenna 3 is connected via a suitable cable 8 or else via wireless transmission to a computerized inventory control system which maintains a database which is updated by information supplied from the RFID tags 6 via the antennas 3.

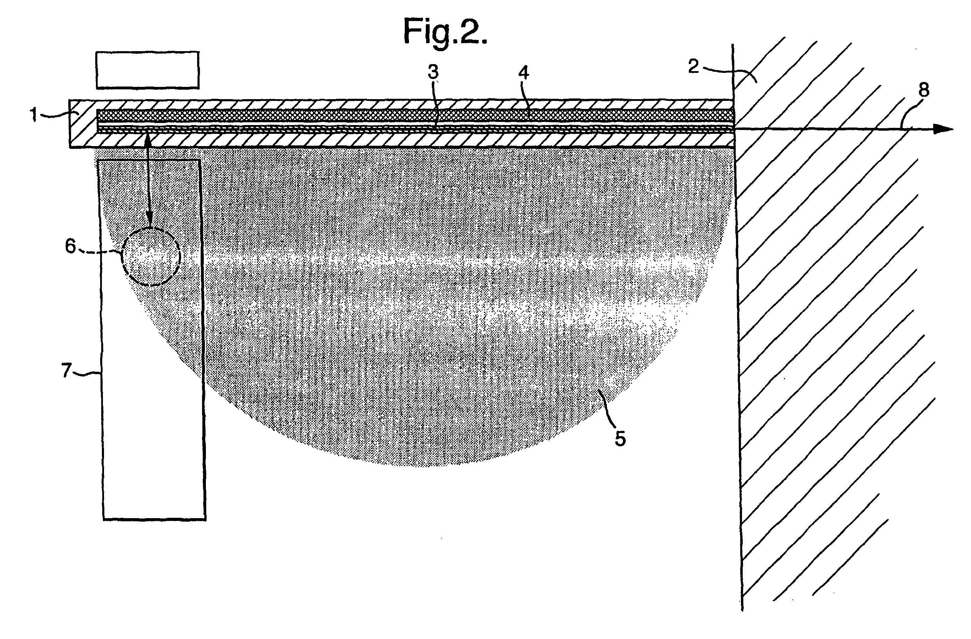

Fig. 2 illustrates a modified design in which items 7 are intended to be slung beneath a shelf 1 which includes a hook or similar device to hold the items. Again, appropriate shielding can be provided for the antenna 3.

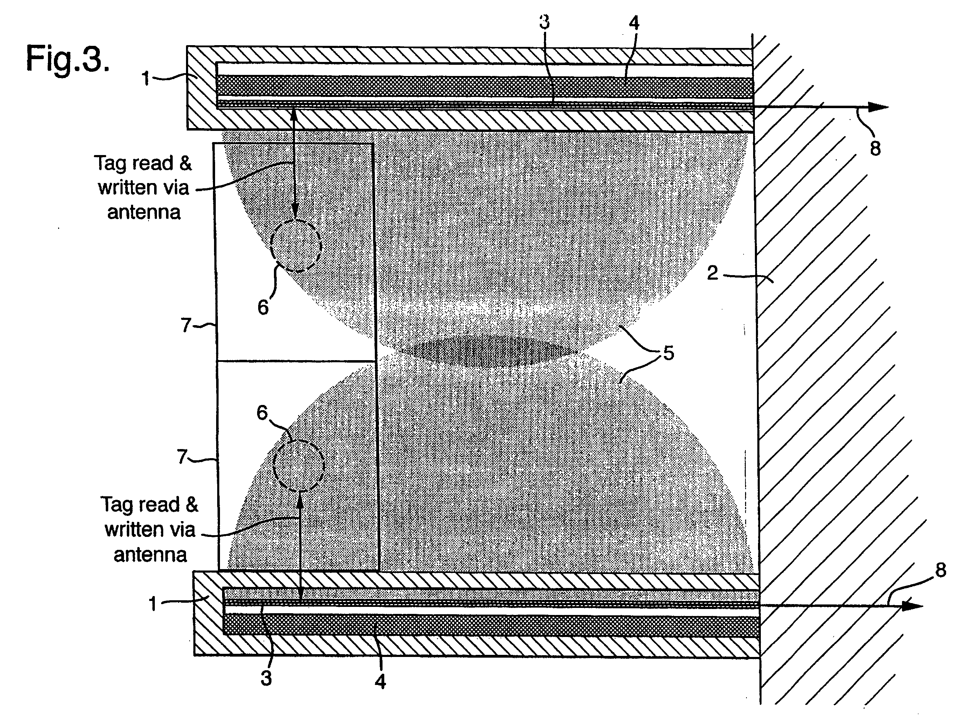

More complex designs may be necessary where items are intended for stacking one on top of another, because individual items may act as shields for the tag reading system by attenuating the radiation, so as to cause some tags to be unread. A more complex design is shown in Fig. 3 in which a pair of antennas are provided, one on the underside of an upper shelf 1 and another on the top of a lower shelf 1'.

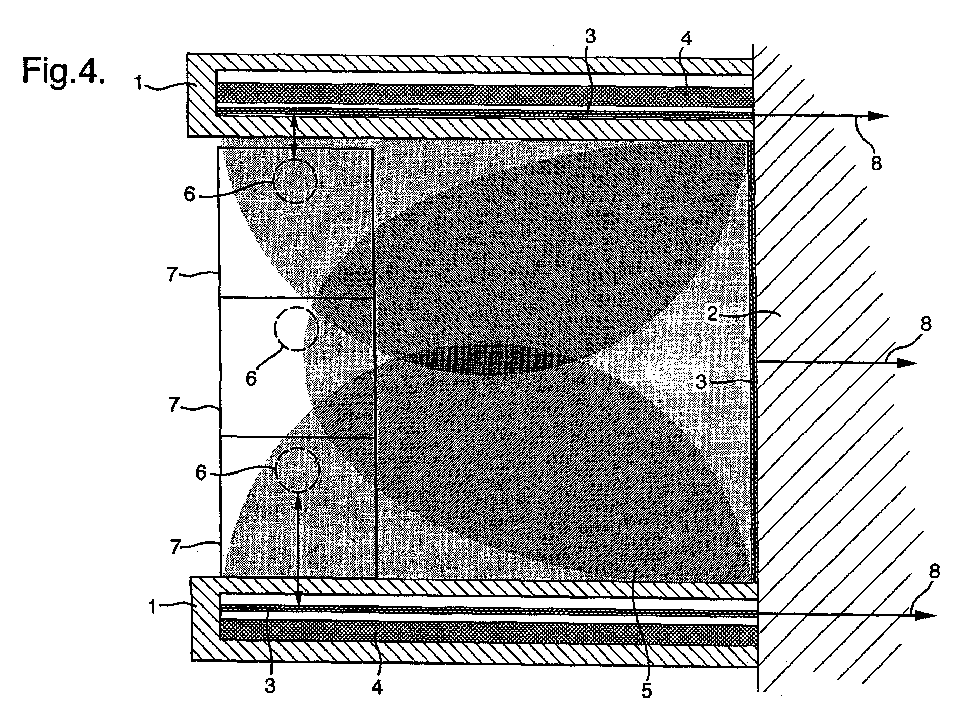

Still more complex designs, such as that shown in Fig. 4 may be provided where multiple items may be stacked on top of one another, in this case, a further antenna 3 being disposed adjacent to the wall panel 2 or the like. Each of the antennas shown in Fig. 4 is disposed to detect a different set of tags depending upon the range and interference from the items themselves. Depending upon the information supplied by each tag, the computer system to which the antennas are attached will be able to identify or at least infer the number of products on the shelf.

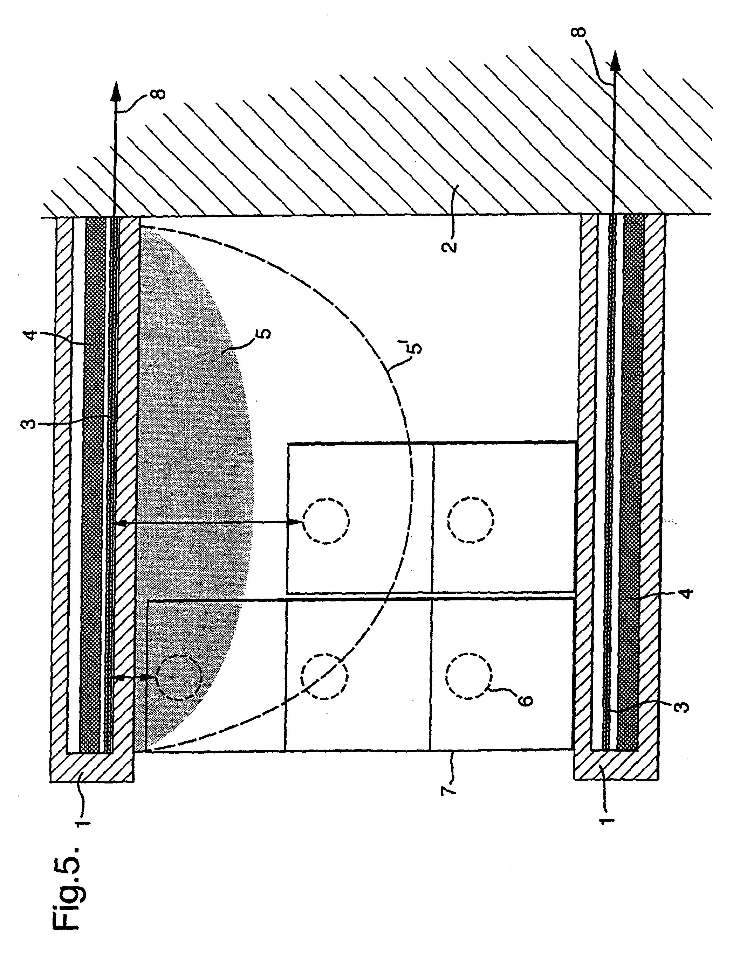

An alternative approach indicated in Fig. 5, is the use of shelf antennas that can detect at different frequencies or different field sizes indicated by the different antenna fields 5, 5'. The system may be used in combination with a further antenna 3 located, for example, as shown, in an opposing shelf.

It will be readily apparent that a very wide number of possible configurations is available, depending upon the type of tags used, the items intended to be displayed, etc., and the present invention is not limited to any particular combination.

A system of this type is capable of providing monitoring and tracking of items in real time or close to real time with a high degree of accuracy and precision without the need for manual intervention. This overcomes the currently labour-intensive shelf checking systems presently used and enables a number of problems to be overcome such as misplacement of items, failure to replenish removed of items with sufficient speed, non-detection of shelf "sweeping" by thieves, failure to reorder stolen or shrunken stock and the need to conduct laborious stock checks on a regular basis.

Additionally, the tags may be read by appropriate checkout systems also connected to the computerized inventory system, providing additional information and verification.

## Claims

1. A storage system comprising one or more supports (1) and, in a fixed physical association with the one or more supports, one or more sensors (3) arranged i) to detect the presence of transponders (6) attached to or integrally associated with items (7) to be stored on the one or more supports, ii) to read information from the transponders, and iii) to transmit the information read from the transponders to, for example, a data processing unit.

2. A storage system according to claim 1, wherein at least one sensor is arranged to receive signals from a transponder comprising an RFID tag.

3. A storage system according to any of claims 1 to 2, wherein one or more of the supports includes an electronic character display.

4. A storage system according to any of the preceding claims, wherein the supports comprise shelves.

5. An inventory control system including a storage system according to any of claims 1 to 4, and a data processing unit arranged to receive information from the sensor or sensors.

6. An inventory control system according to claim 5, wherein the data processing unit is a computer system programmed to maintain a database of information about individual items held on the supports for stock control purposes and the like.

7. An inventory control system according to claim 5 or claim 6, including software to analyse the level of stock of items on individual shelves and provide a signal indicative of the requirement for replenishment of the items when the number of items falls below a pre-determined threshold level.

8. A system according to any of claims 5 to 7, when dependent on daim 5, including means for passing information to a shelf display so as to display the prices of shelved items and/or other information, enabling price changes to be indicated substantially instantaneously when changes are made in the data processing unit.

9. A system according to any of claims 5 to 8, including means for checking the location and/or quantity of items at a given shelf location and providing an indication of misplaced items.

10. A system according to any of claims 5 to 9, including means for providing an indication of the removal of large numbers of items usually sold singly or in small numbers from a shelf location.

## Patentansprüche

1. Warenlagersystem mit einem oder mehreren Haltern (1) und, in fester körperlicher Zuordnung zu dem einen oder den mehreren Haltern, einem oder mehreren Sensoren (3), die so angeordnet sind, dass sie i) das Vorhandensein von Transpondern (6) erfassen, die an Gütern (7), die in dem einen oder den mehreren Haltern zu lagern sind, angebracht oder diesen integral zugeordnet sind, ii) Information von den Transpondern lesen und iii) die von den Transpondern gelesene Information an z. B. eine Datenübertragungseinheit übertragen.

2. Warenlagersystem nach Anspruch 1, bei dem mindestens ein Sensor so ausgebildet ist, dass er Signale von einem Transponder mit einem RFID-Etikett empfängt.

3. Warenlagersystem nach einem der Ansprüche 1 bis 2, bei dem einer oder mehrere der Halter ein elektronisches Zeichendisplay aufweisen.

4. Warenlagersystem nach einem der vorstehenden Ansprüche, bei dem die Halter Regale aufweisen.

5. Warenbestands-Steuersystem mit einem Warenlagersystem nach einem der Ansprüche 1 bis 4 und einer Datenverarbeitungseinheit, die so ausgebildet ist, dass sie Information vom Sensor oder den Sensoren empfängt.

6. Warenbestands-Steuersystem nach Anspruch 5, bei dem die Datenverarbeitungseinheit ein Computersystem ist, das so programmiert ist, dass es eine Informationsdatenbank zu auf den Haltern gehaltenen Einzelgütern für Bestandssteuerzwecke und dergleichen aufrecht erhält.

7. Warenbestands-Steuersystem nach Anspruch 5 oder Anspruch 6, mit Software zum Analysieren des Niveaus des Güterbestands in einzelnen Regalen und zum Liefern eines Signals, das das Erfordernis des Wiederauffüllens mit Gütern anzeigt, wenn die Anzahl der Güter unter einen vorbestimmten Schwellenwert fällt.

8. System nach einem der Ansprüche 5 bis 7 in Abhängigkeit von Anspruch 5, mit einer Einrichtung zum Weiterleiten von Information zu einem Regaldisplay, um die Preise der Güter im Regal und/oder andere Information anzuzeigen, was es ermöglicht, Preisänderungen im Wesentlichen momentan anzuzeigen, wenn in der Datenverarbeitungseinheit Änderungen vorgenommen werden.

9. System nach einem der Ansprüche 5 bis 8, mit einer Einrichtung zum Prüfen des Orts und/oder der Menge von Gütern an einem vorgegebenen Regalort und zum Liefern eines Hinweises auf falsch platzierte Güter.

10. System nach einem der Ansprüche 5 bis 9, mit einer Einrichtung zum Liefern eines Hinweises betreffend das Wegnehmen einer großen Anzahl von Gütern, die im Allgemeinen einzeln oder mit kleiner Menge verkauft werden, von einem Regalort.

## Revendications

1. Système de stockage comprenant un ou plusieurs supports (1) et, en association physique fixe avec un ou plusieurs supports, un ou plusieurs capteurs (3) conçus i) pour détecter la présence de transpondeurs (6) fixés ou intégralement associés à des articles (7) à stocker sur un ou plusieurs supports, ii) pour lire des informations à partir des transpondeurs, et iii) pour transmettre les informations lues à partir des transpondeurs, par exemple, à une unité de traitement de données.

2. Système de stockage selon la revendication 1, dans lequel au moins un capteur est conçu pour recevoir des signaux provenant d'un transpondeur comportant une étiquette RFID (identification par radio-fréquence).

3. Système de stockage selon l'une quelconque des revendications 1 à 2, dans lequel un ou plusieurs supports incluent un affichage à caractères électronique.

4. Système de stockage selon l'une quelconque des revendications précédentes, dans lequel les supports comportent des étagères.

5. Système de contrôle des stocks incluant un système de stockage selon l'une quelconque des revendications 1 à 4, et une unité de traitement de données conçue pour recevoir des informations provenant du capteur ou des capteurs.

6. Système de contrôle des stocks selon la revendication 5, dans lequel l'unité de traitement de données est un système informatique programmé pour gérer une base de données d'informations concernant des articles individuels conservés sur les supports dans le but d'un contrôle des stocks et analogue.

7. Système de contrôle des stocks selon la revendication 5 ou 6, incluant un logiciel pour analyser le niveau de stock d'articles sur des étagères individuelles et délivrer un signal indiquant la nécessité d'un réapprovisionnement des articles lorsque le nombre d'articles chute au-dessous d'un niveau de seuil prédéterminé.

8. Système selon l'une quelconque des revendications 5 à 7, lorsque dépendante de la revendication 5, incluant des moyens pour transmettre des informations dans un affichage d'étagère de manière à afficher les prix des articles contenus sur l'étagère et/ou d'autres informations, permettant d'indiquer des changements de prix pratiquement instantanément lorsque des changements sont effectués dans l'unité de traitement de données.

9. Système selon l'une quelconque des revendications 5 à 8, incluant des moyens pour surveiller l'emplacement et/ou la quantité d'articles à un emplacement d'étagère donné et fournir une indication d'articles mal placés.

10. Système selon l'une quelconque des revendications 5 à 9, incluant des moyens pour délivrer une indication de retrait de grands nombres d'articles habituellement vendus à l'unité ou en petits nombres d'un emplacement d'étagère.
